# EUROPEAN PATENT SPECIFICATION

(11) **EP 0 704 491 B1**
(45) Date of publication and mention of the grant of the patent: **17.07.2002**
(21) Application number: 95306902.8
(22) Date of filing: 29.09.1995
(51) Int. Cl.: C08L 83/04, C08K 5/12, C08K 5/54, C08K 5/14

(54) **Silicone rubber composition**
Silikonkautschukzusammensetzung
Composition d'élastomère de silicone

(30) Priority: 30.09.1994 JP 26195594
(43) Date of publication of application: 03.04.1996
(73) Proprietor: Dow Corning Toray Silicone Co., Ltd., Chuo-ku, Tokyo (JP)
(72) Inventor: Hirai, Kazuo, Dow Corning Toray Silicone Co., Ltd., Ichihara-shi, Chiba Prefecture (JP)
(74) Representative: Kyle, Diana

(56) References cited:
- GB-A- 2 030 999
- US-A- 3 794 612
- US-A- 5 032 626
- US-A- 5 312 855

## Description

The present invention relates to a silicone rubber composition which shows excellent adhesion to various substrates.

Silicone rubber compositions, comprising organopolysiloxane and organic peroxide, cure quickly to form silicone rubber when heated. However, there has been a problem with their adhesion to substrate materials such as metal, plastic, glass, and the like. To overcome this problem, the prior art has proposed a silicone rubber composition compounded with diallylphthalate (JP-A 49-99650); a silicone rubber composition compounded with 3-methacryloxypropyltrimethoxysilane (JP-A (Kokai) 55-34993), and a silicone rubber composition compounded with triallyltrimellitate (JP-A 62-30151).

However, the substrate adhesion of the silicone rubber compositions proposed in JP-A 49-99650 and JP-A 62-30151 is not sufficient, and the compatibility of diallylphthalate and triallyltrimellitate with organopolysiloxane is also low. In addition, these constituents tend to bleed out of these compositions and their cured silicone rubbers during storage. Also, the silicone rubber composition of JP-A 55-34993 lacks acceptable sufficient adhesion.

A silicone rubber composition is provided which has excellent adhesion to various substrate materials with which it is in contact during its cure. This composition comprises an adhesion promoter comprising an addition reaction product or a reaction mixture of (i) a carboxylic acid ester described by general formula 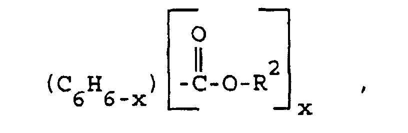 where R² is an alkenyl group and x is a number of 1 to 6, and (ii) an alkoxysilane expressed by general formula 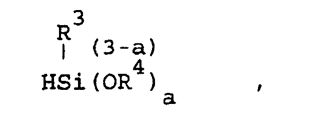 where R³ is a monovalent hydrocarbon group which does not contain aliphatic unsaturated linkage, R⁴ is an alkyl group, and a is a number of 1 to 3.

The present invention introduces a silicone rubber composition comprising:
(A) 100 parts by weight of an organopolysiloxane described by average unit formula

   R¹ ₙSiO_{(4-n)/2} ,

   where R¹ is a substituted or an unsubstituted monovalent hydrocarbon group, and n is a number of 1.9 to 2.1,
(B) 0.1 to 10 parts by weight of an organic peroxide,
(C) 0.1 to 10 parts by weight of an addition reaction product or a reaction mixture of (i) a carboxylic acid ester described by general formula 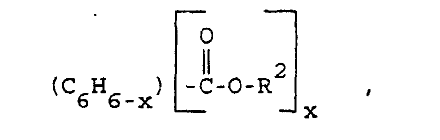 where R² is an alkenyl group and x is a number of 1 to 6, and (ii) an alkoxysilane described by general formula 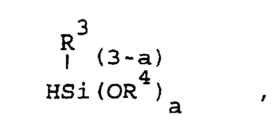 where R³ is a monovalent hydrocarbon group which does not contain aliphatic unsaturated linkage, R⁴ is an alkyl group, and a is a number of 1 to 3, and, optionally, a silicone rubber composition compounded with
(D) 1 to 300 parts by weight of a reinforcing filler with a specific surface area of 50 m²/g or greater.

The (A) constituent, organopolysiloxane, is the principal constituent of our composition, and is expressed by the average unit formula : R¹ₙSiO_{(4-n)/2}. R¹ is a substituted or an unsubstituted monovalent hydrocarbon group. For example, it can be an alkyl group such as methyl, ethyl, propyl, butyl, pentyl, and hexyl; an alkenyl group such as vinyl, allyl, butenyl, pentenyl, and hexenyl; an aryl group such as phenyl, tolyl, xylyl, and naphthyl; a cycloalkyl group such as cyclopentyl or cyclohexyl; an aralkyl group such as benzyl or phenethyl; and a halogenated alkyl group such as 3-chloropropyl or 3,3,3-trifluoropropyl. Preferably, R¹ is methyl, vinyl, phenyl, or 3,3,3-trifluoropropyl. "n" is a number in the range of 1.9 to 2.1. The (A) constituent has the constituting siloxane units of R¹₃SiO_{1/2}, R¹₂(OH)SiO_{1/2}, R¹₂SiO_{2/2}, R¹SiO_{3/2}, and SiO_{4/2}. The (A) constituent preferably contains R¹₂SiO_{2/2} units, R¹₃SiO_{1/2} units, or R¹₂(OH)SiO_{1/2} units as essential units, and depending on the situation, it can contain a small amount of R¹SiO_{3/2} and/or SiO_{4/2} units. Moreover, the (A) constituent can also be a mixture of two or more polymers.

There is no particular limitation for the molecular structure of (A), and it can be a straight chain or a partially branched straight chain.

Preferably, it has a straight chain structure. The (A) constituent is, for example, trimethylsiloxy-capped dimethylpolysiloxane, trimethylsiloxy-capped methylvinylpolysiloxane, trimethylsiloxy-capped methylphenylpolysiloxane, trimethylsiloxy-capped dimethylsiloxane-methylvinylsiloxane copolymer, trimethylsiloxy-capped dimethylsiloxane-methylphenylsiloxane copolymer, trimethylsiloxy-capped dimethylsiloxane-methyl(3,3,3-trifluoropropyl)siloxane copolymer, trimethylsiloxy-capped dimethylsiloxane-methylvinylsiloxane-methylphenylsiloxane copolymer, dimethylvinylsiloxy-capped dimethylpolysiloxane, dimethylvinylsiloxy-capped methylvinylpolysiloxane, dimethylvinylsiloxy-capped methylphenylpolysiloxane, dimethylvinylsiloxy-capped dimethylsiloxane-methylvinylsiloxane copolymer, dimethylvinylsiloxy-capped dimethylsiloxane-methylphenylsiloxane copolymer, dimethylvinylsiloxy-capped dimethylsiloxane-methyl(3,3,3-trifluoropropyl)siloxane copolymer, dimethylvinylsiloxy-capped dimethylsiloxane-methylvinylsiloxane-methylphenylsiloxane copolymer, silanol-capped dimethylpolysiloxane, silanol-capped methylvinylpolysiloxane, silanol-capped methylphenylpolysiloxane, silanol-capped dimethylsiloxane-methylvinylsiloxane copolymer, silanol-capped dimethylsiloxane-methylphenylsiloxane copolymer, silanol-capped dimethylsiloxane-methyl(3,3,3-trifluoropropyl)siloxane copolymer, silanol-capped dimethylsiloxane-methylvinylsiloxane-methylphenylsiloxane copolymer, trimethoxysiloxy-capped dimethylpolysiloxane, trimethoxysiloxy-capped dimethylsiloxane-methylvinylsiloxane copolymer, trimethoxysiloxy-capped dimethylsiloxane-methylphenylsiloxane copolymer, and trimethoxysiloxy-capped dimethylsiloxane-methylvinylsiloxane-methylphenylsiloxane copolymer. In the present composition, these organopolysiloxanes are compounded individually, or as a mixture of more than one kind of organopolysiloxane.

There is no particular limitation for the viscosity at 25°C of (A) but it is preferably higher than 10,000 centistokes (mm 2/s). More preferably, it is higher than 1,000,000 centistokes (mm2/s), and most preferably it is in the range of 5,000,000 to 50,000,000 centistokes (mm 2/s). If an organopolysiloxane having a viscosity lower than 10,000 centistokes (mm2/s) at 25°C is used as the (A) constituent, the mechanical strength of the silicone rubber obtained is reduced. To obtain a high strength silicone rubber, it is recommended to use an organopolysiloxane having a viscosity higher than 1,000,000 centistokes (mm 2/s) at 25°C. When an organopolysiloxane having a viscosity higher than 1,000,000 centistokes (mm 2/s) at 25°C is used as (A), the silicone rubber composition obtained is in putty-form. This is advantageous since the composition is not squeezed out between the substrates, even when pressure-bonded between said substrates. Also, our silicone rubber composition can be applied as an adhesive in string-form, tape-form, sheet-form or film-form.

The (B) constituent, organic peroxide, functions as the curing agent of the present composition. There is no particular limitation for such organic peroxide, and it can be, for example, hydroperoxide such as t-butylhydroxyperoxide (τ = 264°C), cumenehydroperoxide (τ = 255°C), di-i-propylbenzenehydroperoxide (τ = 205°C), p-menthanehydroperoxide (τ = 216°C), 2,5-dimethyl-2,5-dihydroperoxide (τ = 257°C), 2,5-dimethyl-2,5-dihydroperoxy-3-hexyne (τ = 264°C), and pinenehydroperoxide (τ = 229°C); dialkylperoxide such as di-isobutylperoxide (τ = 89°C), di-t-butylperoxide (τ = 193°C), di-t-amylperoxide (τ = 190°C), t-butylcumylperoxide (τ = 178°C), dicumylperoxide (τ = 171°C), 2,5-dimethyl-2,5-di(t-butylperoxy)hexane (τ = 179°C), 2,5-dimethyl-2,5-di(t-butylperoxy)-3-hexyne (τ = 193°C), α,α'-bis(t-butylperoxy)-di(i-butylperoxy)benzene (τ = 182°C), 1,1-bis(t-butylperoxy)-3,3,5-trimethylcyclohexane (τ = 153°C), n-butyl-4,4'-bis(t-butylperoxy)valerate (τ = 165°C), 2,2-bis(4,4-di-t-butylperoxycyclohexyl)propane (τ = 154°C), 2,2-bis-(t-butylperoxy)butane (τ = 199°C), and 1,1-di-(t-butylperoxy)cyclohexane (τ = 153°C); diacylperoxide such as caprylperoxide (τ = 114°C), lauroylperoxide (τ = 115°C), stearoylperoxide (τ = 114°C), succinylperoxide (τ = 144°C), benzoylperoxide (τ = 133°C), p-chlorobenzoylperoxide (τ = 133°C), o-chlorobenzoylperoxide (τ = 118°C), 2,4-dichlorobenzoylperoxide (τ = 112°C), and octanoylperoxide (τ = 116°C); peroxyester such as t-butylperoxyacetate (τ = 159°C), t-butylperoxy-2-ethylhexanoate (τ *=* 135°C), t-butylperoxylaurate (τ *=* 165°C), t-butylperoxybenzoate (τ = 166°C), di-t-butyldiperoxyphthalate (τ = 159°C), 2,5-dimethyl-2,5-di(benzoylperoxy)hexane (τ = 162°C), t-butylperoxymaleate (τ = 148°C), t-butylperoxy-i-propylcarbonate (τ = 158°C), t-butylperoxypivalate (τ = 110°C), and t-butylperoxyneodecanoate (τ = 101°C) ; peroxydicarbonate such as diisopropylperoxydicarbonate (τ = 88°C) or di-2-ethylhexylperoxydicarbonate (τ = 91°C); and ketoneperoxide. The τ in parenthesis represents the decomposition temperature at which the half-life of the organic peroxide is 1 minute.

In our compositions, the organic peroxide is compounded individually, or as a mixture of two or more kinds of the (B) constituent. Also, it is preferable to use an organic peroxide having a (τ) of 125°C or lower. This is because a silicone rubber composition in which the organic peroxide has a (τ) lower than 125°C, is bonded strongly to a substrate, that is relatively less heat resistant under moderate conditions, for example below 125°C, and preferably at 70 to 120°C.

The compounding amount of (B) is in the range of 0.1 to 10 parts by weight per 100 parts by weight of (A), and is preferably in the range of 0.5 to 5 parts by weight. If the amount of (B) is less than 0.1 part by weight per 100 parts of (A), the curability of the composition obtained is drastically degraded. If the compounding amount of (B) exceeds 10 parts by weight, the silicone rubber obtained becomes much too hard.

The (C) constituent adds adhesion to the present composition, and is an addition reaction product or a reaction mixture of (i) a carboxylic acid ester described by general formula 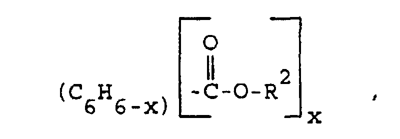 where R² is an alkenyl group and x is a number of 1 to 6, and (ii) an alkoxysilane described by general formula 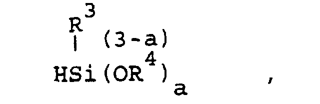 where R³ is a monovalent hydrocarbon group which does not contain aliphatic unsaturated linkage, R⁴ is an alkyl group, and a is a number of 1 to 3.

In the (i) constituent, R² is an alkenyl group, for example, vinyl, allyl, isopropenyl, butenyl, pentenyl, hexenyl, or heptenyl. Preferred is when R² is allyl. Also, x is a number of 1 to 6, and is preferably 3 or 4.

The (i) constituent can be, for example, allylbenzoate, diallylterephthalate, diallylisophthalate, triallyltrimellitate, tetraallylpyromellitate, isopropenylbenzoate, diisopropenylterephthalate, diisopropenylisophthalate, diisopropenylphthalate, triisopropenyltrimellitate, tetraisopropenylpyromellitate, tributenyltrimellitate, tripentenyltrimellitate, trihexenyltrimellitate, triheptenyltrimellitate, tetrabutenylpyromellitate, tetrapentenyltrimellitate, tetrahexenylpyromellitate, tetraheptenylpyromellitate, and hexaallylmellitate. It is preferred that (i) is triallyltrimellitate or tetraallylpyromellitate.

In the (ii) constituent, R³ is a monovalent hydrocarbon group which does not contain aliphatic unsaturated linkage. It can be, for example, an alkyl group such as methyl, ethyl, propyl, butyl, pentyl, and hexyl; an aryl group such as phenyl, tolyl, xylyl, and naphthyl; a cycloalkyl group such as cyclopentyl or cyclohexyl; and an aralkyl group such as benzyl or phenethyl. Preferred is when R³ is methyl or phenyl. Further R⁴ is an alkyl group, for example, methyl, ethyl, propyl, butyl, pentyl, or hexyl. Preferred is when R⁴ is methyl or ethyl because good adhesive properties are obtained. Also, a is a number of 1 to 3, and for good adhesive properties a is preferably 3.

The (ii) constituent is, for example, trimethoxysilane, triethoxysilane, tripropoxysilane, tributoxysilane, methyldimethoxysilane, methyldiethoxysilane, ethyldimethoxysilane, phenyldimethoxysilane, or methylphenylmethoxysilane. Preferred is when (ii) is trimethoxysilane or triethoxysilane.

The (C) constituent is prepared by the addition reaction- of the (i) constituent and the (ii) constituent. There is no particular limitation for the method of preparation of (C). For example, it is preferable to carry out the addition reaction of (i) and (ii) in the presence of a hydrosilylation reaction catalyst. This catalyst can be, for example, a platinum catalyst, a rhodium catalyst, or a palladium catalyst. Preferred is a platinum catalyst such as platinum metal, platinum black, silica-supported platinum, activated carbon-supported platinum, chloroplatinic acid, alcohol solution of chloroplatinic acid, a complex of platinum and an olefin, or a complex of platinum and vinylsiloxane. There is no particular limitation in the amounts of (i) and (ii) reacted. Preferably, for each alkenyl group provided by the (i) constituent, there should be to 0.01 to 5 moles of the (ii) constituent. More preferred is one alkenyl group provided by the (i) constituent per 0.01 to 0.9 moles of the (ii) constituent. The adhesion of our silicone rubber composition is improved by carrying out the addition reaction with an excess of the (ii) constituent relative to the alkenyl groups provided by the (i) constituent. The (C) constituent is obtained as the reaction mixture, and this mixture is directly compounded into the present silicone rubber composition, or the addition reaction product is first separated before being compounded into said composition.

The (C) constituent is a carboxylic acid ester which contains alkoxy groups bonded to silicon atoms and is described by general formula 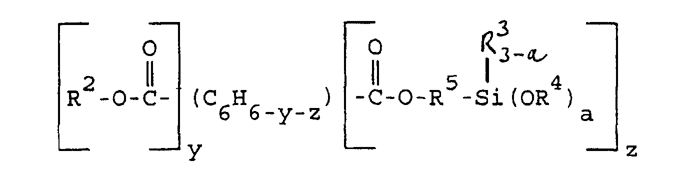 where R² is an alkenyl group, R³ is a monovalent hydrocarbon group which does not contain aliphatic unsaturated linkage, R⁴ is an alkyl group, R⁵ is an alkylene group, a is a number of 1 to 3, y is a number of 0 to 5, z is a number of 1 to 6, and y+z is a number of 1 to 6; or (C) is a reaction mixture in which this ester is the principal component. Since (C) is compatible with our silicone rubber composition, it does not bleed out of said composition or cured product when placed in storage. Our composition also provides excellent adhesion to various substrate materials. R², R³, and R⁴ are the same groups as described before. R⁵ is an alkylene group, for example, ethylene, propylene, butylene, pentylene, or hexylene.

The compounding amount of (C) is in the range of 0.1 to 10 parts by weight per 100 parts by weight of (A), and is preferably in the range of 0.2 to 5 parts by weight. If the amount of (C) is less than 0.1 part by weight per 100 parts of (A), the adhesion of the composition obtained is drastically degraded. If the (C) constituent exceeds 10 parts by weight, the adhesion is not greatly improved, but the storage stability obtained is unacceptable.

It is preferable to optionally compound reinforcing filler of a specific surface area of 50 m²/g or greater as a (D) constituent, in addition to the (A) through (C) constituents in our silicone rubber compositions. The (D) constituent is, for example, fumed silica, wet method silica, or fumed titanium oxide. -These reinforcing fillers can also be made hydrophobic by treatment of their surface with organoalkoxysilane, organochlorosilane, organosilazane, organopolysiloxane, or organocyclosiloxane. It is necessary that the specific surface area of the (D) constituent be 50 m²/g or greater, and it is preferable that it be 100 m²/g or greater. Two or more kinds of these reinforcing fillers can be compounded as a mixture into the present composition.

The compounding amount of the (D) constituent is in the range of 1 to 300 parts by weight per 100 parts by weight of (A), and is preferably in the range of 10 to 200 parts by weight. If the amount of (D) is less than 1 part by weight per 100 parts by weight of (A), the effect of the reinforcing filler in the silicone rubber product is insignificant. If the reinforcing filler exceeds 300 parts by weight, the workability of the silicone rubber composition is degraded.

Also, non-reinforcing fillers can be compounded as an optional constituent. Such non-reinforcing filler is, for example, baked silica, pulverized quartz, fused silica, titanium oxide, iron oxide, aluminum oxide, zinc oxide, magnesium oxide, zinc carbonate, magnesium carbonate, calcium carbonate, silicon nitride, aluminum nitride, boron nitride, aluminum hydroxide, diatomaceous earth, calcium silicate, magnesium silicate, aluminum silicate, mica, talc, clay, bentonite, hollow glass beads, molten glass beads, pulverized glass, glass fiber, carbon fiber, polyester fiber, polytetrafluoroethylene resin, and poly(vinyl chloride) resin. These non-reinforcing fillers may also be surface treated by organosilicon compounds such as organoalkoxysilane, organochlorosilane, organosilazane, organopolysiloxane, and organocyclosiloxane. In the present composition, these non-reinforcing fillers can also be compounded as a mixture of two or more.

Another optional constituent can be an adhesion promoter such as 3-mercaptopropyltrimethoxysilane, 3-mercaptopropylmethyldimethoxysilane, N-(2-aminoethyl)-3-aminopropyltrimethoxysilane, 3-aminopropyltrimethoxysilane, 3-aminopropyltriethoxysilane, 3-methacryloxypropyltrimethoxysilane, 3-methacryloxypropylmethyldimethoxysilane, 3-glycidoxypropyltrimethoxysilane, 3-glycidoxypropylmethyldimethoxysilane, 2-(3,4-epoxycyclohexyl) ethyltrimethoxysilane, vinyltrimethoxysilane, or allyltrimethoxysilane.

Other optional constituents in our silicone rubber compositions include, heat resistance agents such as titanium oxide, iron oxide red, iron oxide black, iron oxide yellow, cerium oxide, cerium silanolate, cerium salt of fatty acid, iron octylate, and barium zirconate; flame retardants such as carbon black, benzotriazole, zinc carbonate, manganese carbonate, platinum compound, and antimony oxide; plasticizers such as phthalate, adipate, maleate, fumarate, and phosphate; processing aids such as stearic acid, sodium stearate, fatty acid esters, or fatty acid amides; and foaming agents.

The silicone rubber composition of this invention is prepared by uniformly mixing (A) through (C), constituents, and other optional constituents as described, in a kneading machine such as kneader-mixer, Banbury™ mixer, or two-roll mill. If our silicone rubber composition is in putty-form, it can be processed to a desired form such as a string, tape, film, or sheet by a processing machine such as a calender roll, laminate roll, or extruder. In this case, it is preferable to protect the silicone rubber composition from adhesion degradation with polyethylene film or polypropylene film.

There is no particular limitation for the curing conditions of our silicone rubber compositions, but the heating temperature required is the temperature at which (B) sufficiently functions as the curing agent. For example, for an organic peroxide having a τ lower than 125°C, the heating temperature is below 125°C, and is preferably 70 to 120°C. When an organopolysiloxane having a viscosity higher than 1,000,000 centistokes (mm2/s) at 25°C is used as (A), the silicone rubber composition obtained is in putty-form, which can be further processed to string, tape, film, or sheet-forms. Also, after our silicone rubber composition in putty-form is pressure-bonded to the substrate, even if it is pressurized to some extent, it is not squeezed out of the bonded area, and it is also strongly bonded to said substrate.

Our silicone rubber compositions have excellent adhesion to various substrate materials, for example, metals such as iron, stainless steel, aluminum, nickel, and copper; plastics such as acrylic resin, polyamide resin, polystyrene resin, polyester resin, epoxy resin, and polybutyleneterephthalate resin; ceramics; and glass. In particular, in the case where an organic peroxide having a τ lower than 125°C, is compounded as the (B) constituent, strong bonding is achieved at relatively low temperatures below 125°C, preferably 70 to 120°C. Therefore, these compositions are suitable for adhesion to plastic substrates which are heat sensitive.

The silicone rubber compositions of this invention can be used in string, tape, film, or sheet forms as a sealant in the civil engineering or construction industries, in electrical applications or electronic parts, or in the automobile industry.

The silicone rubber composition of this invention is explained in detail by the following Examples. The viscosity in the Examples is the value measured at 25°C.

Example 1. 100 parts by weight of a dimethylvinylsiloxy-capped dimethylsiloxane-methylvinylsiloxane copolymer having a viscosity of 10,000,000 centistokes (mm 2/s), wherein the molar ratio of dimethylsiloxane unit to methylvinylsiloxane unit was 99.84 : 0.16, and 50 parts by weight of hydrophobic fumed silica having a specific surface area of 100 m²/g, were mixed while heating at 170°C for 1 hour using a kneader-mixer to prepare a base compound. 100 parts by weight of this base, 1.25 parts by weight of 2,4-dichlorobenzoylperoxide, and 1.3 parts by weight of a reaction mixture prepared by the addition reaction of 1 mole of tetraallylpyromellitate and 1 mole of trimethoxysilane, in the presence of platinum catalyst, were uniformly mixed with a two-roll mill to obtain a silicone rubber composition of the present invention in putty-form.

Using a hot press, a portion of this composition was cured at 120°C for 10 minutes to form a silicone rubber sheet of 2 mm thickness. The physical properties of this sheet were measured following the test method for vulcanized rubber specified in JIS K 6301.

Another portion of this composition was extruded using an extruder, and a film of 1.0 mm thickness and 10 cm width was prepared. This silicone rubber film was then sandwiched between a glass plate (5 mm × 25 mm × 100 mm) and a stainless steel (SUS304) plate (1 mm × 25 mm x 60 mm) with a contact area of 25 mm × 10 mm. The sandwiched film was heated in a hot press for one minute at a temperature of 120°C and at a pressure of 4 kg/cm². A fabricated test piece was obtained having the glass plate and the stainless steel plate bonded with silicone rubber. The bonding strength of this test piece was measured by the test method for adhesives specified in JIS K 6850. The results are shown in Table 1.

Comparison Example 1. A silicone rubber composition was prepared by the same procedure as Example 1 except that 3-methacryloxypropyltrimethoxysilane was used instead of the reaction mixture prepared by the addition reaction of 1 mole of tetraallylpyromellitate with one mole of trimethoxysilane. This comparative composition was cured by the same procedure, and the physical properties and bonding strength of the silicone rubber obtained were measured. These results are also given in Table 1.

Comparison Example 2. A silicone rubber composition was prepared by the same procedure as Example 1 except that 3-glycidoxypropyltrimethoxysilane was used instead of the reaction mixture of 1 mole of tetraallylpyromellitate per 1 mole of trimethoxysilane. This comparative composition was cured as described in Example 1, and the physical properties and bonding strength were measured. The results are listed in Table 1.

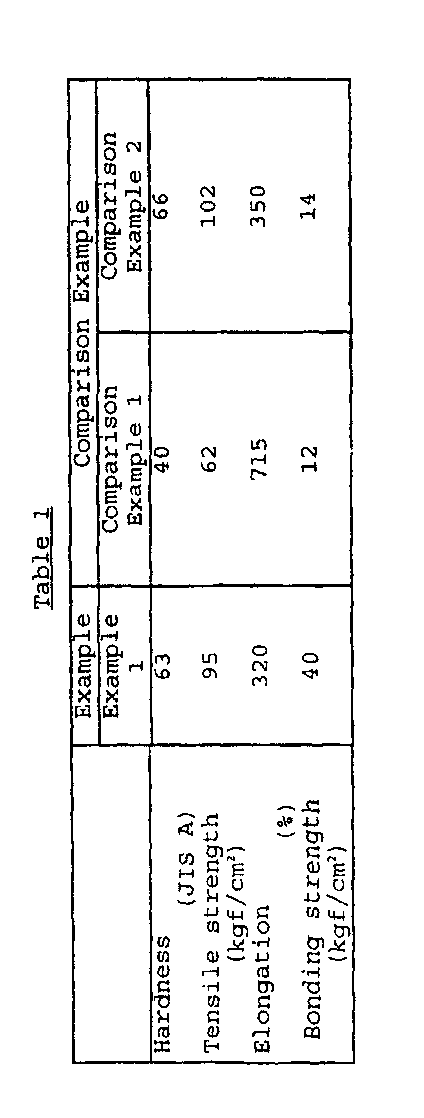

Example 2. 100 parts by weight of an organopolysiloxane mixture, which was prepared by uniformly mixing 50 parts by weight of dimethylvinylsiloxy-capped dimethylsiloxane-methylvinylsiloxane copolymer having a viscosity of 5,000,000 centistokes (mm2/s), wherein the molar ratio of dimethylsiloxane unit to methylvinylsiloxane unit was 99.73 : 0.27, and 50 parts by weight of silanol-capped dimethylpolysiloxane, consisting of (CH₃)₂SiO_{2/2} units and SiO_{4/2} units and having a viscosity of 20,000,000 centistokes (mm 2/s), and 50 parts by weight of hydrophobic wet method silica, with a specific surface area of 620 m²/g, were mixed while heating at 150°C for 1 hour using a kneader-mixer to prepare a base compound. 100 parts by weight of this base, 1.25 parts by weight of o-chlorobenzoylperoxide, and 1.5 parts by weight of a reaction mixture prepared by the addition reaction of 1 mole of tetraallylpyromellitate and 1 mole of triethoxysilane, in the presence of platinum catalyst, were uniformly mixed and kneaded using a two-roll mill to obtain a silicone rubber composition of this invention.

This silicone rubber composition was sandwiched between 2 sheets of polypropylene film, and using a calender roll, a silicone rubber composition film of 1.0 mm thickness was fabricated. This silicone rubber film was peeled from the polypropylene film and sandwiched between the substrate materials shown in Table 2 (1 mm × 25 mm × 60 mm) so that the adhesion area was 25 mm × 10 mm. Then, this was heated for one minute using a hot press under 3 kg/cm² pressure and a temperature of 100°C to fabricate a test piece bonded with silicone rubber. The bonding strength of this test piece was measured by the test method for adhesives of JIS K 6850. These results are also reported in Table 2.

Comparison Example 3. A silicone rubber composition was prepared by the same procedure as described in Example 2 except that triallyltrimellitate was used instead of the reaction mixture prepared by the addition reaction of 1 mole of tetraallylpyromellitate and 1 mole of triethoxysilane as in Example 2. This silicone rubber composition was formed into a sheet by the same procedure as in Example 2, and its bonding strength was also measured. The results are given in Table 2.

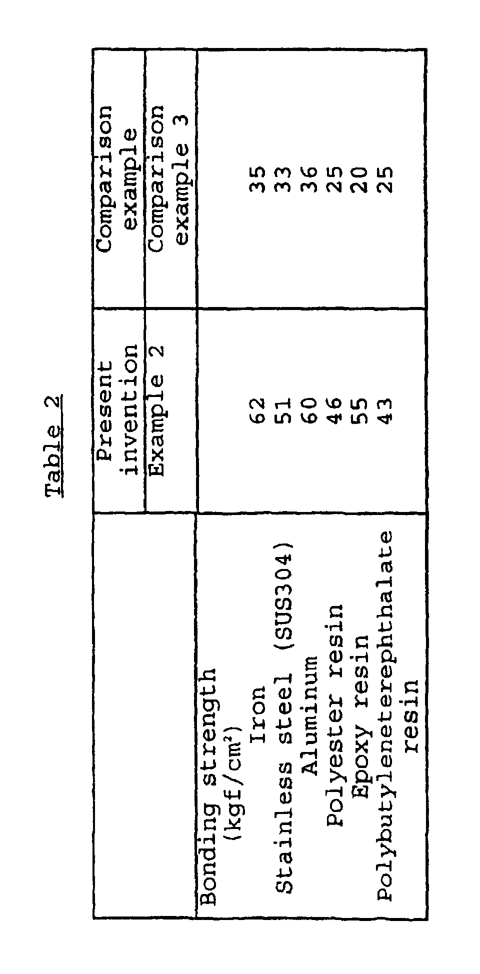

## Claims

1. A silicone rubber composition comprising:
(A) 100 parts by weight of an organopolysiloxane described by average unit formula
R¹ ₙSiO_{(4-n)/2} ,
where R¹ is a substituted or an unsubstituted monovalent hydrocarbon group, and n is a number of 1.9 to 2.1,
(B) 0.1 to 10 parts by weight of an organic peroxide, and
(C) 0.1 to 10 parts by weight of an addition reaction product or a reaction mixture of (i) a carboxylic acid ester described by general formula 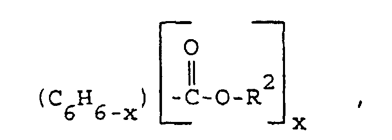 where R² is an alkenyl group and x is a number of 1 to 6, and (ii) an alkoxysilane expressed by general formula 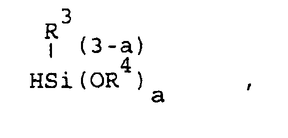 where R³ is a monovalent hydrocarbon group which does not contain aliphatic unsaturated linkage, R⁴ is an alkyl group, and a is a number of 1 to 3.

2. A silicone rubber composition according to claim 1 further comprising:
(D) 1 to 300 parts by weight of a reinforcing filler with a specific surface area of 50 m²/g or greater.

3. A silicone rubber composition according to Claims 1 or 2, where the organic peroxide has a one minute half-life decomposition temperature less than or equal to 125°C.

4. A silicone rubber composition according to Claim 1, where the organopolysiloxane has a viscosity at 25°C of 1,000,000 (mm2/s) centistokes or greater.

5. A silicone rubber composition according to Claim 1, where R² is allyl, x is 3 or 4, R³ is methyl or phenyl, R⁴ is methyl or ethyl, and a is 3.

## Patentansprüche

1. Siliconkautschukzusammensetzung enthaltend:
(A) 100 Gewichtsteile eines Organopolysiloxans, beschrieben durch die mittlere Einheitenformel
R¹ ₙSiO_{(4-n)/2},
worin R¹ eine substituierte oder eine unsubstituierte monovalente Kohlenwasserstoffgruppe ist und n eine Zahl von 1,9 bis 2,1 ist,
(B) 0,1 bis 10 Gewichtsteile eines organischen Peroxids und
(C) 0,1 bis 10 Gewichtsteile eines Additionsreaktionsprodukts oder einer Reaktionsmischung aus (i) einem Carbonsäurester, beschrieben durch die allgemeine Formel 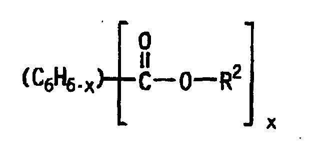 worin R² eine Alkenylgruppe ist und x eine Zahl von 1 bis 6 ist, und (ii) einem Alkoxysilan, ausgedrückt durch die allgemeine Formel 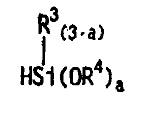 worin R³ eine monovalente Kohlenwasserstoffgruppe ist, die keine aliphatisch ungesättigte Verknüpfung enthält, R⁴ eine Alkylgruppe ist und a eine Zahl von 1 bis 3 ist.

2. Siliconkautschukzusammensetzung nach Anspruch 1, weiterhin enthaltend:
(D) 1 bis 300 Gewichtsteile eines verstärkenden Füllstoffs mit einer spezifischen Oberfläche von 50 m²/g oder größer.

3. Siliconkautschukzusammensetzung nach Anspruch 1 oder 2, wobei das organische Peroxid eine 1-Minuten-Halbwertszeit-Zersetzungstemperatur von weniger als oder gleich 125°C aufweist.

4. Siliconkautschukzusammensetzung nach Anspruch 1, wobei das Organopolysiloxan eine Viskosität bei 25°C von 1.000.000 mm²/s (Centistokes) oder mehr aufweist.

5. Siliconkautschukzusammensetzung nach Anspruch 1, wobei R² gleich Allyl ist, x gleich 3 oder 4 ist, R³ gleich Methyl oder Phenyl ist, R⁴ gleich Methyl oder Ethyl ist und a gleich 3 ist.

## Revendications

1. Composition d'élastomère de silicone comprenant :
(A) 100 parties en poids d'un organopolysiloxane défini par la formule unitaire moyenne
R¹ ₙSiO_{(4-n)/2}
où R¹ est un groupe hydrocarboné monovalent substitué ou non substitué et n est un nombre de 1,9 à 2,1,
(B) 0,1 à 10 parties en poids d'un peroxyde organique, et
(C) 0,1 à 10 parties en poids d'un produit de réaction d'addition ou d'un mélange de réaction (i) d'un ester d'acide carboxylique défini par la formule générale 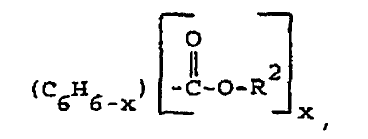 où R² est un groupe alcényle et x est un nombre de 1 à 6, et (ii) d'un alcoxysilane exprimé par la formule générale 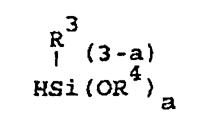 où R³ est un groupe hydrocarboné monovalent qui ne contient pas de liaison insaturée aliphatique, R⁴ est un groupe alkyle, et a est un nombre de 1 à 3.

2. Composition d'élastomère de silicone selon la revendication 1 comprenant également :
(D) 1 à 300 parties en poids d'une charge renforçante ayant une surface spécifique de 50 m²/g ou plus.

3. Composition d'élastomère de silicone selon les revendications 1 ou 2, dans laquelle le peroxyde organique a une température de décomposition avec une demi-vie d'une minute inférieure ou égale à 125°C.

4. Composition d'élastomère de silicone selon la revendication 1, dans laquelle l'organopolysiloxane a une viscosité à 25°C de 1 000 000 (mm²/s) centistokes ou plus.

5. Composition d'élastomère de silicone selon la revendication 1, dans laquelle R² est allyle, x est 3 ou 4, R³ est méthyle ou phényle, R⁴ est méthyle ou éthyle, et a est 3.
